# EUROPEAN PATENT APPLICATION

(11) **EP 1 726 476 A2**
(43) Date of publication of application: **29.11.2006**
(21) Application number: 06010697.8
(22) Date of filing: 23.05.2006
(51) Int. Cl.: B60N 2/48, B60N 2/42

(54) **Vehicle seat and method of supporting driver/passenger using the same**

(30) Priority: 26.05.2005 JP 2005153973
(71) Applicant: NISSAN MOTOR CO., LTD., Yokohama-shi Kanagawa-ken (JP)
(72) Inventor: Sugimoto, Yousuke, Patricio Sanz Mexico city (MX)
(74) Representative: Görz, Ingo

(57) **Abstract**

A vehicle seat which includes: a seat back for supporting on a front side thereof a back of a driver/passenger seated in the vehicle seat, the seat back having an upper portion for supporting an upper portion of the driver's/passenger's back; a headrest provided on top of the seat back for supporting a head of the driver/passenger; a headrest forward moving device which forces the headrest to move forward relative to the seat back when a backward force acts on the front side of the seat back; and a seat back upper portion push-out device which pushes the upper portion of the seat back forward concurrently with the forward movement of the headrest.

## Description

### BACKGROUND OF THE INVENTION

### FIELD OF INVENTION

The present invention relates to a vehicle seat which supports a driver/passenger seated therein in a vehicle collision, and to a method of supporting a driver/passenger using the vehicle seat.

### DESCRIPTION OF RELATED ART

Japanese Patent Application Laid-open Publication No. 10(1998)-119616 discloses a vehicle seat to reduce a load to the driver' s/passenger' s neck in a vehicle collision, in which an energy absorption cassette provided on a seat back at a position corresponding to chest of a driver/passenger seated, and an energy absorption body provided in a headrest are relatively adjusted so as to reduce the velocity difference of rebound between the driver's/passenger's head and the driver's/passenger's body/chest, and the time difference of start of rebound therebetween.

### SUMMARY OF THE INVENTION

In the above mentioned vehicle seat, the energy absorption cassette and energy absorption body are embedded in the seat back and the headrest, respectively, for providing adjusted reaction forces against the forces applied from the driver' s/passenger' s body/chest and head. However, they do not positively move a part of the vehicle seat toward the driver/passenger, i.e. in the forward direction of the vehicle seat (forward direction of a vehicle). Therefore, it may take too long time to start supporting the driver's/passenger's body/chest and head in a vehicle collision.

Furthermore, the energy absorption cassette is disposed at an upper portion of the seat back, being set to a predetermined degree of hardness in order to quickly respond to the force applied from the driver/passenger. Therefore, the surface of the upper portion of the seat back becomes too stiff for a normal driving and the comfort of the vehicle seat when a driver/passenger sits in the vehicle seat is sacrificed. On the other hand, when the front surface of the energy absorption cassette is covered with a cushion material, the force from the driver/passenger cannot be instantaneously transmitted to the energy absorption cassette. The energy absorption body also has the same problem as above.

The present invention is made in the light of these problems. An object of the present invention is to provide a vehicle seat which quickly supports a driver/passenger seated therein in a vehicle collision, while securing the comfort of the seat back and headrest when the driver/passenger sits in the vehicle seat, and a method of supporting the driver/passenger using the vehicle seat.

An aspect of the present invention is a vehicle seat comprising: a seat back for supporting on a front side thereof a back of a driver/passenger seated in the vehicle seat, the seat back having an upper portion for supporting an upper portion of the driver' s/passenger' s back; a headrest provided on top of the seat back for supporting a head of the driver/passenger; a headrest forward moving device which forces the headrest to move forward relative to the seat back when a backward force acts on the front side of the seat back; and a seat back upper portion push-out device which pushes the upper portion of the seat back forward concurrently with the forward movement of the headrest.

### BRIEF DESCRIPTION OF THE DRAWINGS

The invention will now be described with reference to the accompanying drawings wherein:
Fig. 1 is a side view showing the upper body of a driver/passenger seated in a vehicle seat according to a first embodiment of the present invention.
Fig. 2 is a side view showing a headrest forward moving device and a seat back upper portion push-out device of the first embodiment of the present invention.
Fig. 3 is an enlarged view showing the portion A in Fig. 2.
Fig. 4 is a block diagram showing a link mechanism according to a second embodiment of the present invention.
Fig. 5 is a block diagram showing a link mechanism according to a third embodiment of the present invention.

### DETAILED DESCRIPTION OF THE PREFERRED EMBODIMENT

Embodiments of the present invention will be explained below with reference to the drawings, wherein like members are designated by like reference characters.

### (First Embodiment)

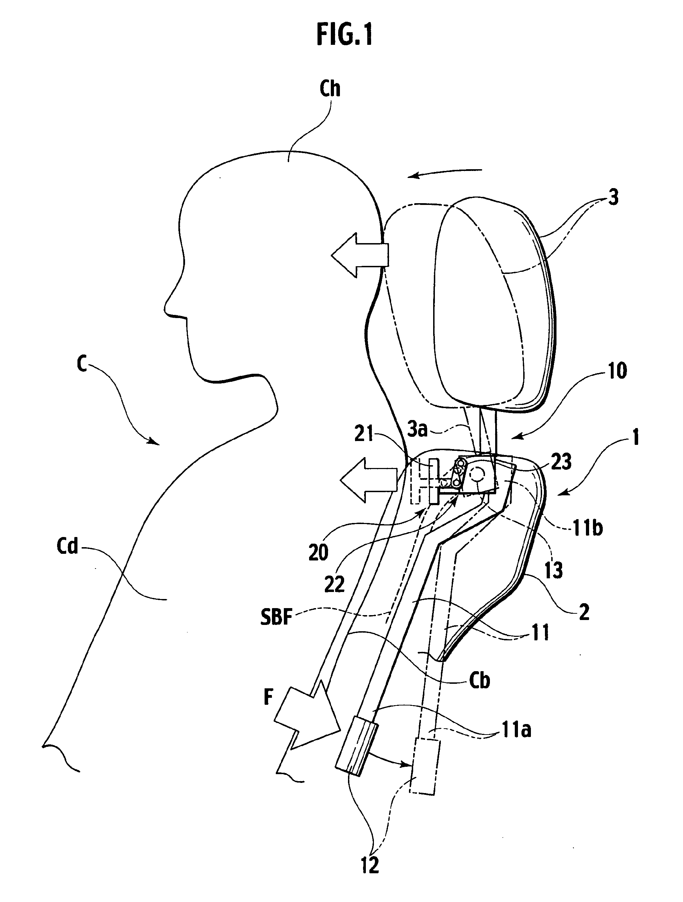

In a first embodiment of the present invention, as shown in Fig. 1, a vehicle seat 1 includes: a seat back 2 which supports on a front side thereof a back Cb of a driver/passenger C, an upper portion of the seat back 2 is constructed to support an upper portion (first thoracic vertebra) of the driver/passenger (C)'s back Cb; a headrest 3 which is laid on top of the seat back 2 to support the driver/passenger (C) ' s head Ch; a headrest forward moving deice 10 which moves the headrest 3 in the forward direction of the vehicle seat 1 (in the forward direction of the vehicle) when a force F (a moving load in the backward direction of the vehicle) acts on the seat back 2 in the backward direction of the vehicle seat 1; and a seat back upper portion push-out device 20 which pushes out an upper portion of the seat back 2 supporting the upper portion (first thoracic vertebra) of the driver/passenger (C)'s back Cb, in the forward direction of the vehicle seat 1 at the same time as the movement of the headrest 3 in the forward direction.

In the present invention, a method of supporting the driver/passenger using the vehicle seat 1 includes: moving the headrest 3 in the forward direction of the vehicle seat 1 when the force F acts on the seat back 2 in the backward direction of the vehicle seat 1, concurrently pushing out the upper portion of the seat back 2 supporting the upper portion of the driver/passenger (C) ' s back Cb, in the forward direction of the vehicle seat 1, so as to reduce the amount of a relative displacement between the driver/passenger (C) ' s head Ch and the upper portion of the driver/passenger (C)'s back Cb (the difference between an amount of displacement of the head Ch from a normal position thereof to a position where the head Ch is supported by the headrest 3, and an amount of displacement of the upper portion of the back Cb from a normal position thereof to a position where the upper portion of the back Cb is supported by the upper portion of the seat back 2).

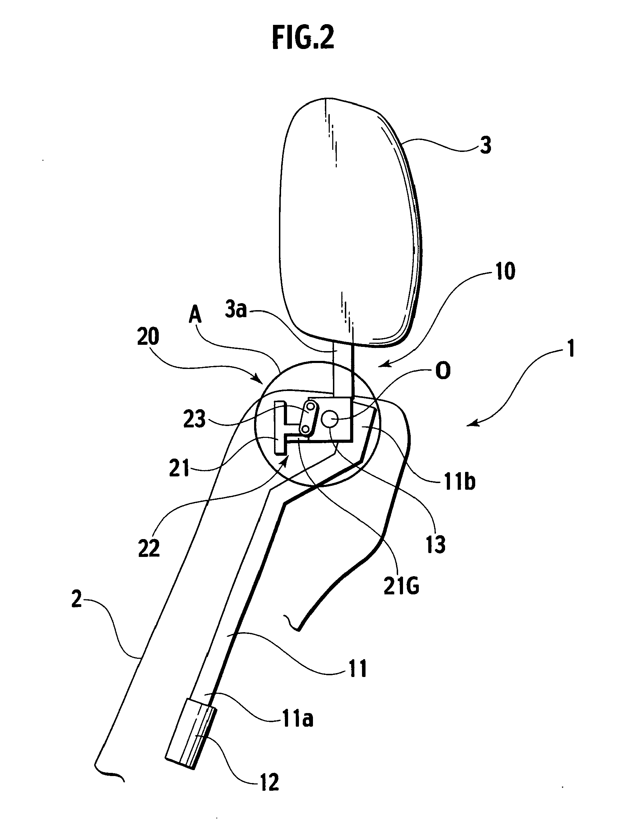

The headrest forward moving device 10 includes a vertically extending headrest supporting member 11 having the headrest 3 attached to a top portion 11b thereof. As shown in Fig. 2, the headrest supporting member 11 is supported so as to freely rotate relative to the seat back 2 about the rotation axis 0 of a spindle 13 which is horizontally extending in the widthwise direction of the vehicle seat 1 and is rotatably supported in the upper portion of the seat back 2. At a lower portion 11a of the headrest supporting member 11, a force receiving portion 12 is provided to receive the force F being applied from the driver/passenger (C) ' s back Cb in the backward direction of the vehicle seat 1.

The headrest supporting member 11 is disposed in the seat back 2 as shown in Fig. 1. The upper portion 11b thereof is integrally joined with the spindle 13 which is supported on a seat back frame SBF and is rotatable about the rotation axis O. Moreover, a stay 3a of the headrest 3 is jointed to the upper portion 11b of the headrest supporting member 11. The headrest 3 is positioned above the rotation axis O. The force receiving portion 12 is provided below the rotation axis 0 at a position corresponding to the middle of the driver/passenger (C)'s back Cb.

When the driver/passenger (C)'s back Cb pushes the seat back 2 with a force F in the backward direction, and the force F acts on the seat back 2 in the backward direction of the vehicle seat 1, the force receiving portion 12 is pushed and moved backward relative to the seat back 2 to a position shown by double-dashed lines in Fig. 1, thereby the headrest supporting member 11 rotates counterclockwise in the drawing about the rotation axis 0 of the spindle 13, thus causing the headrest 3 to be pushed forward.

The seat back upper push-out device 20 includes: a pushing member 21 which is embedded in the upper portion of the seat back 2 so as to be moveable forward and backward relative to the seat back 2, and moves the front surface of the upper portion of the seat back 2 forward to push the upper portion of the driver/passenger (C)'s back Cb forward when the pushing member 21 moves forward; and a link mechanism 22 which causes the pushing member 21 to move forward in conjunction with the forward movement of the headrest 3.

The pushing member 21 includes: a push portion 21a to push the upper portion of the driver/passenger (C)'s back Cb, which has a substantially rectangular shape when viewed from the front of the vehicle seat 1; and a supporting rod 21b which extends from the middle of the back of the push portion 21a in the backward direction of the vehicle seat 1. The push portion 21a and the supporting rod 21b thus form a substantially T-shape when viewed from the lateral side of the vehicle seat 1. This pushing member 21 is guided on a guide member 21G which is fixed to the seat back frame SBF, and is slidable thereon in the forward and backward directions of the vehicle seat 1 (in the forward and backward directions of a vehicle).

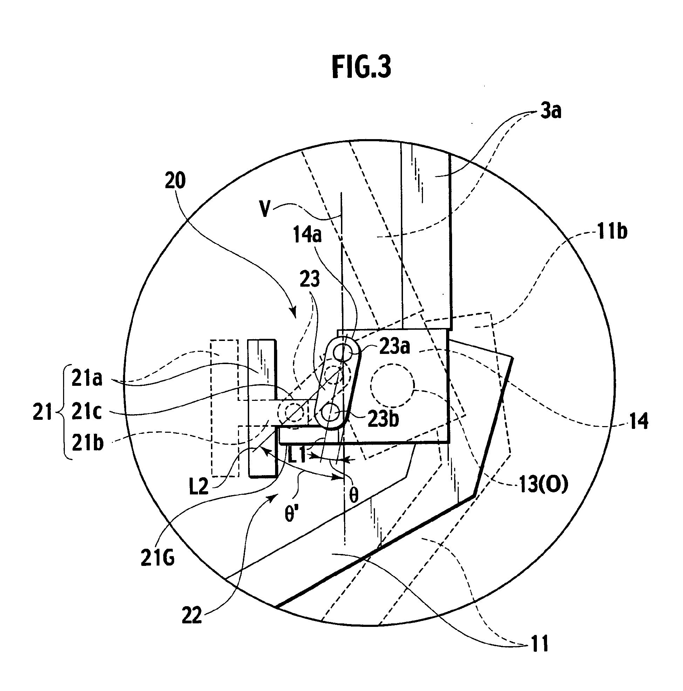

The link mechanism 22 connects the headrest supporting member 11 and the pushing member 21 to each other as shown in Fig. 3, and includes a link member 23 which converts the angular displacement or the amount of rotation of the headrest supporting member 11 moving the headrest 3 forward into the horizontal displacement of the pushing member 21 in the forward direction. In Figs 1 and 3, solid lines show positions in the normal state, while dashed lines show positions in an operation state in a vehicle collision.

That is, the link member 23 is rotatably connected to a peripheral portion 14a of a rotation member 14 which is integrally joined with the spindle 13 as shown in Fig. 3 and to a rear end portion 21c of the supporting rod 21b of the pushing member 21 so that the peripheral portion 14a and the rear end 21c are connected to each other. In the normal state, the link member 23 is connected to the pushing member 21 at a predetermined angle of inclination relative to the moving direction of the pushing member 21. To be more precise, the link member 23 is inclined at an angle θ relative to the vertical direction V of the vehicle seat 1 (vertical direction of a vehicle), the angle θ being formed between the vertical line V and a line L1 passing through the center of a connection pin 23a being a connection point of the link member 23 and the peripheral portion 14a of the rotation member 14 and the center of a connection pin 23b being a connection point of the link member 23 and the rear end portion 21c of the supporting rod 21b of the pushing member 21.

Although one end of the link member 23 is connected to the rotation member 14 through the connection pin 23a, the rotation member 14 is integrally joined with the spindle 13 and the spindle 13 is integrally joined with the headrest supporting member 11. Therefore, one end of the link member 23 is connected to the headrest supporting member 11.

Meanwhile, although the other end of the link member 23 is connected to the supporting rod 21b of the pushing member 21 through the connection pin 23b, the supporting rod 21b is supported on the guide member 21G at a lower surface of the supporting rod 21b, and thereby the vertical movement thereof is restrained.

Accordingly, when the supporting member 11 rotates in the forward direction relative to the seat back 2 to move the headrest 3 forward, the rotation member 14 rotates counterclockwise in the drawing about the rotation axis of the spindle 13 together with the spindle 13. Thus, the link member 23 moves forward while rotating clockwise in the drawing so that the angle θ relative to the vertical direction V increases to an angle θ' , having the pushing member 21 pushed out forward.

In the present embodiment, according to the vehicle seat 1 and the method of supporting the driver/passenger using the vehicle seat 1, when a force F acts on the seat back 2 in the backward direction of the vehicle seat 1, the headrest forward moving device 10 causes the headrest 3 to move forward so that the driver's/passenger's head Ch is instantaneously and firmly held (supported) at a position more forward, the seat back upper portion push-out device 20 pushes the upper portion of the seat back 2 forward from inside the seat back 2 so that the upper portion of the driver/passenger (C)'s back Cb is supported at a position more forward, expediting the time at which the driver's/passenger's back is supported in a vehicle collision.

Accordingly, by instantaneously and firmly holding the driver's/passenger's head Ch by using the headrest forward moving device 10, the relative displacement between the head Ch and the upper portion of the back Cb can be reduced and, eventually, a relative acceleration between the head Ch and the body Cd can be reduced, whereby a load to the driver/passenger (C)'s neck Cn is reduced.

Furthermore, since the headrest forward moving device 10 is constructed to cause the entire headrest 3 to move in the forward direction of the vehicle seat 1 and the seat back upper portion push-out device 20 is constructed to cause the upper portion of the seat back 2 to be forcibly pushed out from inside the seat back 2 using the pushing member 21 embedded therein, the cushioning characteristics of the headrest 3 and the upper portion of the seat back 2 are maintained, and the comfort of the vehicle seat 1 can be secured when a driver/passenger sits in the vehicle seat 1 having the seat back 2 and the headrest 3.

In the present embodiment, the headrest forward moving device 10 includes the headrest supporting member 11 which is supported at the upper portion of the seat back 2 to rotate forward and backward relative to the seat back 2 about the rotation axis 0 located at the upper portion of the seat back 2, and has the headrest 3 attached to the upper portion 11b thereof and the force receiving portion 12 at the lower portion 11a thereof to receive the force F applied from the driver/passenger (C)'s back Cb in the backward direction of the vehicle seat 1. When the force F in the backward direction acts from the driver/passenger C on the force receiving portion 12, the headrest supporting member 11 instantaneously rotates to thereby quickly move the headrest 3 forward, whereby the driver/passenger (C)'s head Ch moving backward due to the rebound occurred in a frontal collision or a rear collision of the vehicle, can be held at a position more forward, and eventually a load to the driver/passenger (C)'s neck Cn can further be reduced.

Moreover, the seat back upper portion push-out device 20 includes the pushing member 21 which is embedded in the seat back 2 at the upper portion thereof so as to be moveable forward and backward relative to the seat back 2, and can push the upper portion of the driver/passenger (C)'s back Cb; and the link mechanism 22 which causes the pushing member 21 to move forward in conjunction with the forward movement of the headrest 3. Thus, when the force F acts from the driver/passenger C in the backward direction of the vehicle seat 1, since the pushing member 21 can operate in conjunction with the forward movement of the headrest 3, the upper portion of the seat back 2 can be pushed out forward without a time lag from the start of the forward movement of the headrest 3, and the relative displacement between the head Ch and the upper portion of the back Cb can more be reduced.

The link mechanism 22 includes the link member 23 which connects the headrest supporting member 11 and the pushing member 21 and which converts the angular displacement of the headrest supporting member 11 into the horizontal displacement of the pushing member 21. Thus, the movement of the pushing member 21 in conjunction with the forward movement of the headrest 3 can be achieved with a simple structure in which the headrest supporting member 11 and the pushing member 21 are simply connected with the link member 23. Moreover, a structure of the link mechanism 22 can be simplified.

### (Second Embodiment)

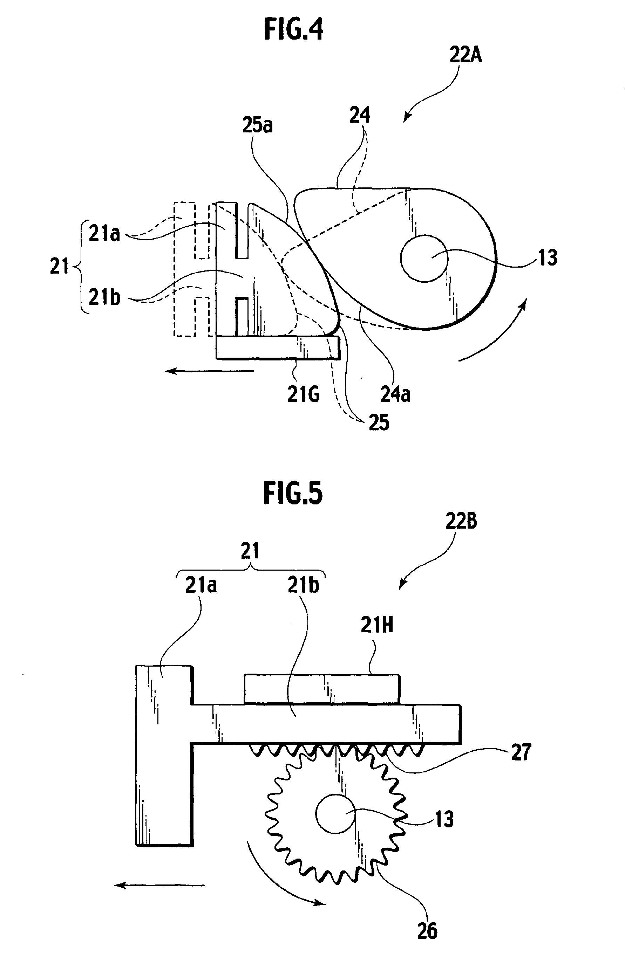

In the second embodiment of the present invention, as shown in Fig. 4, a seat back upper portion push-out device 20 includes a pushing member 21 and a link mechanism 22A, as in the first embodiment. However, the link mechanism 22A in the present embodiment includes a first cam 24 which rotates in conjunction with the rotation of the headrest supporting member 11, and a second cam 25 provided to the pushing member 21 which contacts slidingly with the first cam 24.

That is, the first cam 24 is fixed to a spindle 13 to which the headrest supporting member 11 is connected, and can rotate about the rotation axis of the spindle 13 together with the spindle 13. A cam surface 24a of the first cam 24 facing the second cam 25 is formed to have a curved surface which curves more forward as it extends the upper end thereof.

The second cam 25 is formed integrally with a rear end portion of a supporting rod 21b of the pushing member 21. The cam surface 25a facing the first cam 24 is formed to have a curved surface which curves more backward as it extends to the lower end thereof. The second cam 25 is supported at its lower surface on a guide member 21G in a way that the lower surface of the second cam 25 can slide along the guide member 21G, and thereby the vertical movement of the second cam 25 is restrained. The cam surface 25a constantly and slidingly contacts with the cam surface 24a of the first cam 24.

Accordingly, when the first cam 24 rotates counterclockwise in the drawing in conjunction with the rotation of the headrest supporting member 11, the cam surface 24a contacts slidingly with the cam surface 25a of the second cam 25 and pushes the same in the forward direction of the vehicle seat 1. Since the downward movement of the second cam 25 is restrained by the guide member 21G, the second cam 25 is forced to move along the upper surface of the guide member 21G when pushed by the cam surface 24a. Thereby, the pushing member 21 is pushed out in the forward direction of the vehicle seat 1, causing the upper portion of the seat back 2 to be pushed out forward.

According to the present embodiment, since the link mechanism 22A includes the first cam 24 which rotates in conjunction with the rotation of the headrest supporting member 11, and the second cam 25 provided on the pushing member 21 to slide over the first cam 24, the angular displacement of the headrest supporting member 11 is instantaneously transmitted to the pushing member 21 through the first and second cams 24 and 25. Thus, the upper portion of the seat back 2 can be pushed forward in conjunction with the forward movement of the headrest 3 without having a time lag. In addition, the movement of the pushing member 21 in conjunction with the forward movement of the headrest 3 can be achieved with a simple structure of the first and second cams 24 and 25 provided between the headrest supporting member 11 and the pushing member 21, and consequently, the structure of the link mechanism 22A can be simplified.

In the present embodiment, the shapes of the cam surfaces 24a and 25a are adjusted so that the movement (timing, pressure, or stroke) of the pushing member 21 is adjusted to thereby control a state where the upper portion of the driver/passenger (C)'s back Cb is pushed.

### (Third Embodiment)

In the third embodiment of the present invention, as shown in Fig. 5, a seat back upper portion push-out device 20 includes a pushing member 21 and a link mechanism 22B, as in the first embodiment. However, the link mechanism 22B includes a pinion gear 26 which rotates in conjunction with the rotation of the headrest supporting member 11, and a rack gear 27 provided on the pushing member 21 and mesh with the pinion gear 26.

The pinion gear 26 is provided below the supporting rod 21b of the pushing member 21. The pinion gear 26 is fixed to the spindle 13 to which the headrest supporting member 11 is connected, and rotates counterclockwise in the drawing about the rotation axis of the spindle 13 together with the spindle 13 in conjunction with the rotation of the headrest supporting member 11.

The rack gear 27 is formed on the lower side of the supporting rod 21b of the pushing member 21, and constantly meshes with the pinion gear 26. The supporting rod 21b having the rack gear 27 is supported at its upper side on a guide member 21H fixed to the seat back frame SBF, and slidingly contacts with the lower surface of the guide member 21H, whereby the vertical movement of the supporting rod 21b is restrained.

Accordingly, when the pinion gear 26 rotates counterclockwise in the drawing in conjunction with the rotation of the headrest supporting member 11, the pushing member 21 is pushed out forward together with the rack gear 27 meshed with the pinion gear 26, and thus the upper portion of the seat back 2 is pushed out forward.

Accordingly, since the link mechanism 22B includes the pinion gear 26 which rotates together with the rotation of the headrest supporting member 11 and the rack gear 27 provided on the pushing member 21 and meshed with the pinion gear 26, the rotation of the headrest supporting member 11 is instantaneously transmitted to the pushing member 21 though the pinion gear 26 and the rack gear 27. Therefore, the upper portion of the seat back 2 can be pushed out forward without having a time lag from the forward movement of the headrest 3. Thus, the movement of the pushing member 21 in conjunction with the forward movement of the headrest 3 can be achieved with a simple structure in which the pinion gear 26 and the rack gear 27 are provided between the headrest supporting member 11 and the pushing member 21, thereby achieving the simplification of the structure of the link mechanism 22B.

By replacing the rack gear 27 with a variable rack gear having different gear pitches, the movement (timing, pressure, or stroke) of the pushing member 21 can be adjusted to thereby control a state where the upper portion of the driver/passenger (C)'s back Cb is pushed.

The preferred embodiments described herein are illustrative and not restrictive, and the invention may be practiced or embodied in other ways without departing from the spirit or essential character thereof. The scope of the invention being indicated by the claims, and all variations which come within the meaning of claims are intended to be embraced herein.

The present disclosure relates to subject matters contained in Japanese Patent Application No. 2005-153973, filed on May 26, 2005, the disclosures of which is expressly incorporated herein by reference in its entirety.

## Claims

1. A vehicle seat (1) comprising:
a seat back (2) for supporting on a front side thereof a back (Cb) of a driver/passenger (C) seated in the vehicle seat (1), the seat back (2) having an upper portion for supporting an upper portion of the driver's/passenger's back (Cb);
a headrest (3) provided on top of the seat back (2) for supporting a head (Ch)of the driver/passenger (C);
a headrest forward moving device (10) which forces the headrest (3) to move forward relative to the seat back (2) when a backward force (F) acts on the front side of the seat back (2); and
a seat back upper portion push-out device (20) which pushes the upper portion of the seat back (2) forward concurrently with the forward movement of the headrest (3).

2. The vehicle seat (1) according to claim 1, wherein the headrest forward moving device (10) comprises a headrest supporting member (11) rotatable about a rotation axis (O) fixed to the upper portion of the seat back (2), the headrest supporting member (11) has a force receiving portion (12) provided at a position below the rotation axis (O) for receiving the backward force (F) acting on the front side of the seat back (2), the headrest (3) fixed to the headrest supporting member (11) above the rotation axis (0).

3. The vehicle seat (1) according to either one of claims 1 or 2, wherein the seat back upper portion push-out device (20) comprises a pushing member (21) embedded in the upper portion of the seat back (2) and moveable forward relative to the seat back (2) for pushing the upper portion of the seat back (2) forward; and a link mechanism (22, 22A, 22B) which causes the pushing member (21) to move forward in conjunction with the forward movement of the headrest (3).

4. The vehicle seat (1) according to claim 3, wherein the link mechanism (22) comprises a link member (23) connecting the headrest supporting member (11) and the pushing member (21), the link member (23) converting an angular displacement of the headrest supporting member (11) moving the headrest (3) forward into a horizontal displacement of the pushing member (21).

5. The vehicle seat (1) according to claim 3, wherein the link mechanism (22A) comprises a first cam (24) which rotates along with a rotation of the headrest supporting member (11) and a second cam (25) provided on the pushing member (21) in slidable contact with the first cam (24).

6. The vehicle seat (1) according to claim 3, wherein the link mechanism (22B) comprises a pinion gear (26) which rotates along with a rotation of the headrest supporting member (11) and a rack gear (27) provided on the pushing member (21), meshing with the pinion gear (26).

7. A method of supporting a driver/passenger (C) seated in a vehicle seat (1) having a seat back (2) which supports on a front side thereof the driver's/passenger's back (Cb) and a headrest (3) which supports the driver's/passenger's head, the method comprising; moving the headrest (3) forward relative to the seat back (2), pushing an upper portion of the seat back (2) for supporting an upper portion of the driver's/passenger's back (Cb) forward so as to reduce an amount of relative displacement between the driver' s/passenger' s head (Ch) and the upper portion of the driver's/passenger's back (Cb), when a backward force (F) acts on the front side of the seat back (2).
